**Europäisches Patentamt**

**European Patent Office**

**Office européen des brevets**

(19)

(11) Veröffentlichungsnummer: **0 259 639 B1**

# EUROPÄISCHE PATENTSCHRIFT

(12)

(45) Veröffentlichungstag der Patentschrift: **20.02.91**

(51) Int. Cl.⁵: **G04G 15/00, H05B 1/02**

(21) Anmeldenummer: **87111658.8**

(22) Anmeldetag: **12.08.87**

(54) **Elektronische Schaltuhr.**

(30) Priorität: **16.08.86 DE 3627894**

(43) Veröffentlichungstag der Anmeldung:
**16.03.88 Patentblatt 88/11**

(45) Bekanntmachung des Hinweises auf die Patenterteilung:
**20.02.91 Patentblatt 91/08**

(84) Benannte Vertragsstaaten:
**DE FR GB IT**

(56) Entgegenhaltungen:
**FR-A- 2 478 339      FR-A- 2 547 074**
**FR-A- 2 547 435      GB-A- 2 001 467**
**US-A- 4 320 285      US-A- 4 387 420**

(73) Patentinhaber: **DIEHL GMBH & CO.**
**Stephanstrasse 49**
**D-8500 Nürnberg(DE)**

(72) Erfinder: **Meisner, Alfred**
**Ewaldstrasse 40**
**D-8500 Nürnberg(DE)**
Erfinder: **Liebscher, Bernhard**
**Rüblandener Strasse 42**
**D-8561 Ottensoos(DE)**
Erfinder: **Neubauer, Josef**
**Erlenstrasse 1**
**D-8501 Wendelstein(DE)**
Erfinder: **Arnold, Werner**
**Rezat-Weg 29**
**D-8500 Nürnberg 60(DE)**

(74) Vertreter: **Hofmann, Gerhard, Dipl.-Ing. Paten-tassessor et al**
**Stephanstrasse 49**
**D-8500 Nürnberg(DE)**

## Beschreibung

Die Erfindung betrifft eine elektronische Schaltuhr, insbesondere Herdschaltuhr, mit einem Anzeigefeld und einem Mikroprezessor als Steuerschaltkreis, wobei die Steuerfunktionen durch mehrere Schaltelemente eingegeben werden können, wobei ferner ein auf einer ersten Achse angeordneter Drehknopf zur Erzeugung von Eingabeimpulsen für die Zeitdaten vorgesehen ist, und wobei die Steuerung derart ausgestaltet ist, daß bei Eingabe von Steuerdaten (Schaltzeitdauer, Schaltzeitende) automatisch eine Umschaltung der Schaltuhr von Hand auf Automatikbetrieb erfolgt und bei Abarbeitung des Schaltprogramms eine Zurückschaltung von Automatik- auf Handbetrieb von Hand erfolgen muß.

Derartige Schaltuhren sind bereits bekannt, beispielsweise aus der DE-OS 33 20 128 der Anmelderin. Dort sind zur Eingabe der Steuerfunktionen mehrere Drucktaster vorgesehen, die Eingabe der Zeitdaten erfolgt durch ein in beiden Drehrichtungen endlos verdrehbares Schaltelement, mit welchen Impulse erzeugt werden, durch die die Stunden- und Minutenanzeige auf einer Digitalanzeige schrittweise verstellt werden können. Bei dieser bekannten Uhr ist als Grundstellung für die Steuerfunktionen der Handbetrieb vorgesehen. Dies bedeutet, daß die Kochplatten oder die Backröhre eines Elektroherdes bei Einschaltung der Energieregler sofort eingeschaltet werden. Die Energiezufuhr dauert dabei solange an, bis die Energieregler wieder auf Null gestellt werden. Bei Eingabe eines Schalttermins schaltet die Uhr selbsttätig auf Automatikbetrieb um und die vorgenannten elektrischen Verbraucher werden nach Einstellung der Energieregler erst zu dem von der Schaltuhr vorgegebenen Zeitpunkt ein- bzw. ausgeschaltet.

Bei dieser bekannten Uhr wird nach Abarbeitung eines Schaltprogrammes an der Anzeige ein Blinksignal gegeben, welches als Aufforderung für den Benutzer dient, die Schaltuhr durch Drücken des Drucktasters "Handbetrieb" aus dem Automatikbetrieb wieder in den Handbetrieb umzuschalten. Für den Fall, daß der die Schaltuhr steuernde Mikroprozessor während oder nach Abarbeitung des Schaltprogramms ausfällt, ist die Zurückschaltung von Automatikauf Handbetrieb - welche unter Steuerung durch den Mikroprozessor vorgenommen wird - nicht mehr möglich und daher der Herd zunächst nicht mehr funktionsfähig.

Neben der eingangs genannten Schaltuhr, welche mehrere Drucktaster zur Eingabe von Steuerfunktionen besitzt, sind auch Schaltuhren auf dem Markt, bei welchen die Steuerfunktionen durch einen in mehrere Schaltstellungen verdrehbaren Vorwahlschalter eingegeben werden können.

Es ist nun Aufgabe der Erfindung, bei einer elektronischen Schaltuhr eine Verbesserung dahingehend vorzuschlagen, daß unter Verwendung eines Vorwahlschalters eine Funktion des Herdes auch bei Ausfall des Mikroprozessors gewährleistet ist.

Zur Lösung dieser Aufgabe schlägt die Erfindung eine Anordnung vor, wie sie in den kennzeichnenden Merkmalen des Anspruches 1 erläutert sind.

Bei der erfindungsgemäßen Lösung wird somit das Relais, welches die Verbraucherstromkreise durchschaltet, bei Stellung des Vorwahlschalters auf "Handbetrieb" immer in einem Zustand gehalten, daß die Verbraucherstromkreise durch den Relaiskontakt nicht unterbrochen sind. Bei Ausfall des Mikroprozessors während der Abarbeitung eines Schaltprogrammes kann somit der Vorwahlschalter zurück in seine Betriebsstellung "Handbetrieb" geschaltet werden und betätigt mechanisch den entsprechenden Steuerkontakt für das Relais.

Weiterbildungen der Erfindung sind in den abhängigen Ansprüchen gekennzeichnet. Nachfolgend soll die Erfindung anhand eines Ausführungsbeispiels aufgrund der Zeichnung noch näher erläutert werden.

Es zeigen:

Figur 1     eine schematisierte Vorderansicht einer elektronischen Schaltuhr;

Figur 2     ein Prinzipschaltbild Steuerung einer elektronischen Schaltuhr;

Figur 3     ein Flußdiagramm der Steuerung, soweit sie die erfindungsgemäßen Maßnahmen betrifft.

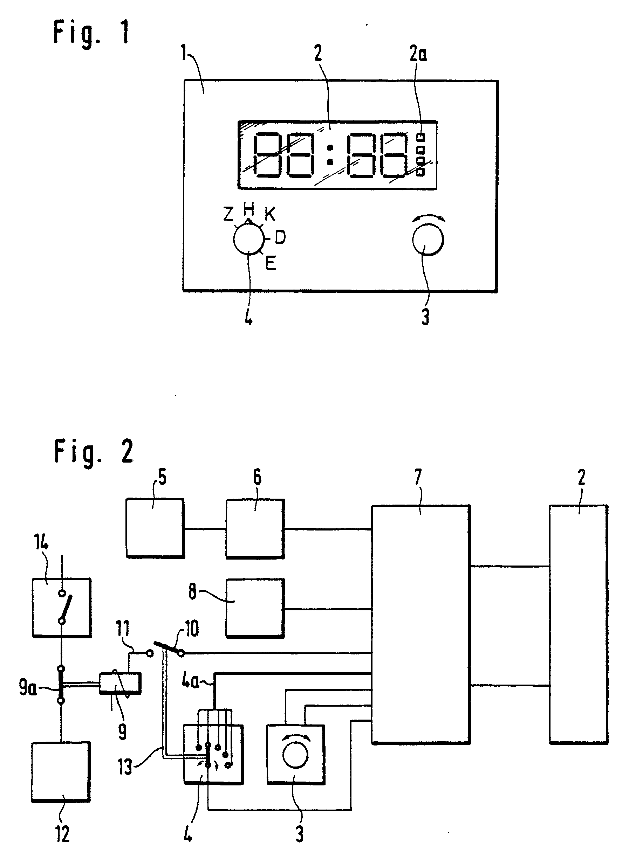

In Figur 1 ist die Vorderansicht einer elektronischen Schaltuhr 1 dargestellt, welches eine 4 Digits aufweisende digitale Anzeige 2 enthält. Dort sind je 2 Digits zur Anzeige der Stunden und der Minuten vorgesehen. Weiterhin sind an der rechten Seite des Anzeigefeldes Leuchtsegmente 2a vorgesehen, welche bei entsprechender Ansteuerung blinken. Weiterhin ist an der Schaltuhr eine Verstellknopf 3 vorgesehen, mit welchem durch Links- oder Rechtsdrehen die Anzeige 2 verstellt werden kann. Diese Art der Verstellung ist seit langem bekannt und bedarf hier keiner näheren Erläuterung. Weiterhin ist unterhalb der Anzeige 2 ein Vorwahlschalter 4 vorgesehen, welcher die Schaltstellungen "Z" (Zeitverstellung), "H" (Handbetrieb), "K" (Kurzzeit), "D" (Schaltzeitdauer), "E" (Schaltzeitende) aufweist. Die Grundstellung des Vorwahlschalters ist die Stellung "H". Verschwenkt man den Drehknopf des Vorwahlschalters 4 nach links, so rastet er in der Stellung "Z" nicht ein, sondern liegt dort nur gegen Federdruck an. Dies soll sicherstellen, daß eine Zeitverstellung nur solange erfolgt, als der Vorwahlschalter tatsächlich ausgelenkt wird. In der Zeit dieses Auslenkens kann durch Verdrehen des Drehknopfes 3 die Zeit auf den gewünschten Wert verstellt werden. Diese Zweihandbedienung der Zeitverstellung ist deshalb vorgesehen, um ein unbeabsichtigtes Verstellen der Tageszeit zu verhindern.

In den Stellungen "K", "D", "E" kann der Vorwahlschalterknopf dagegen einrastend verstellt werden. In jeder dieser 3 Stellungen kann daher durch Verstellen des Drehknopfes 3 eine Zeit (Kurzzeit, Schaltzeitdauer, Schaltzeitende) mit einer Hand eingestellt werden. Während in der Grundstellung "H" die Schaltuhr in dem bereits beschriebenen Betriebszustand "Handbetrieb" ist, kann in den Stellungen "D" und "E" ein Automatikbetrieb der Schaltuhr eingestellt werden. Wird beispielsweise bei Stellung des Vorwahlschalters 4 auf "D" eine Zeitdauer, zum Beispiel 3 Stunden, eingegeben, sowie anschließend ein Schaltzeitende, zum Beispiel 12.30 Uhr bei gleichzeitigem Weiterdrehen des Vorwahlschalters auf Schaltstellung "E" eingegeben, so schaltet die Schaltuhr selbsttätig auf den Automatikbetrieb um, was bedeutet, daß die Verbraucher (Kochplatten, Backröhre), auch wenn sie bereits um 8.00 Uhr beispielsweise entsprechend eingestellt werden, erst um 12.30 Uhr abzüglich 3 Stunden, das heißt, um 9.30 Uhr eingeschaltet werden.

Sobald das Schaltprogramm um 12.30 Uhr beendet ist, beginnen die Leuchtpunkte 2a in der Anzeige zu blinken und weisen den Benutzer darauf hin, daß er den Vorwahlschalter 4 in die Grundstellung "H" zurückzusetzen hat.

In Figur 2 ist die Steuerschaltung der elektronischen Schaltuhr, soweit sie die vorliegende Erfindung betrifft, in einem Blockschaltbild dargestellt. Mit 5 ist ein Netzteil bezeichnet, welches an der Versorgungsspannung liegt und über eine übliche Resetschaltung 6 an einem Mikroprozessor 7 liegt und diesen mit Energie versorgt. Mit 8 ist ein Summer, beispielsweise ein Piezosummer bezeichnet. Dieser ertönt bei Ablauf der Kurzzeit oder bei Erreichen des Schaltzeitendes. Mit 3 ist das Eingabeelement (Bitgenerator) für die Verstellung der Anzeige und mit 4 der Vorwahlschalter bezeichnet. Dessen Ausgangsleitungen von den einzelnen Schaltstellungen zum Mikroprozessor 7 sind symbolisch in einer Leitung 4a zusammengefaßt.

Mit 9 ist ein Ruhestromrelais bezeichnet, dessen Steuerkontakt 10 in der Verbindungsleitung 11 zum Mikroprozessor 7 liegt. Der Schaltkontakt 9a des Relais liegt in dem Stromkreis der Verbraucher 12, im gegebenen Zusammenhang also Kochplatten oder Backröhre. Der Steuerkontakt 10 des Relais steht über ein mechanisches Verbindungsstück 13 mit dem Vorwahlschalter 4 in Verbindung, derart nämlich, daß in der Schaltstellung "H" des Vorwahlschalters 4 der Steuerkontakt 10 geöffnet ist. Dies wiederum hat zur Folge, daß der Schaltkontakt 9a des Relais 9 geschlossen ist und die Verbraucher daher abhängig von der Einstellung durch die Energieregler 14 unmittelbar an das Netz angelegt werden können.

Wie bereits vorstehend teilweise erläutert, wird in der Stellung "H" des Vorwahlschalters der Steuerkontakt 10 geöffnet und der Relaiskontakt 9a geschlossen. Durch Einstellen eines Energiereglers 14 wird der entsprechende Verbraucher sofort auf die entsprechende Heizungsstufe eingestellt und beginnt zu arbeiten, solange, bis der Energieregler 14 wieder zurückgestellt wird.

Wird der Vorwahlschalter auf die Schaltstellung "D" gestellt, ohne daß ein Schaltzeitende eingegeben wird, und wird nur eine Schaltzeitdauer eingegeben, so hat dies zur Folge, daß nach Betätigung eines Energiereglers der entsprechende Verbraucher 12 sofort eingeschaltet wird und solange in Betrieb bleibt, bis die Zeitdauer abgearbeitet ist. Zu diesem Zeitpunkt ertönt der Summer 8 und auf der Anzeige beginnen die Leuchtpunkte 2a zu blinken. Dies ist die Aufforderung an die Benutzerperson, den Vorwahlschalter auf die Stellung "Hand" zurückzustellen, mit der Folge, daß der Schalter 9a geschlossen wird.

Während man den vorbeschriebenen Betrieb als halbautomatisch bezeichnen kann, ist bei Eingabe eines Schaltzeitendes zusätzlich zu einer Schaltzeitdauer - in dem man den Vorwahlschalter 4 in die Schaltstellungen "D" und "E" verstellt - ein vollautomatischer Betrieb gegeben. In diesem Falle arbeiten die Verbraucher nach einer Einstellung eines Energiereglers 14 erst zu dem vom Mikroprozessor aus Schaltzeitende und Schaltzeitdauer errechneten Schaltzeitanfang und bleiben dann solange eingeschaltet, bis die Schaltzeitdauer abgearbeitet ist. Dann beginnen die Leuchtpunkte 2a zu blinken und fordern den Benutzer auf, den Vorwahlschalter in die Stellung "H" zurückzustellen.

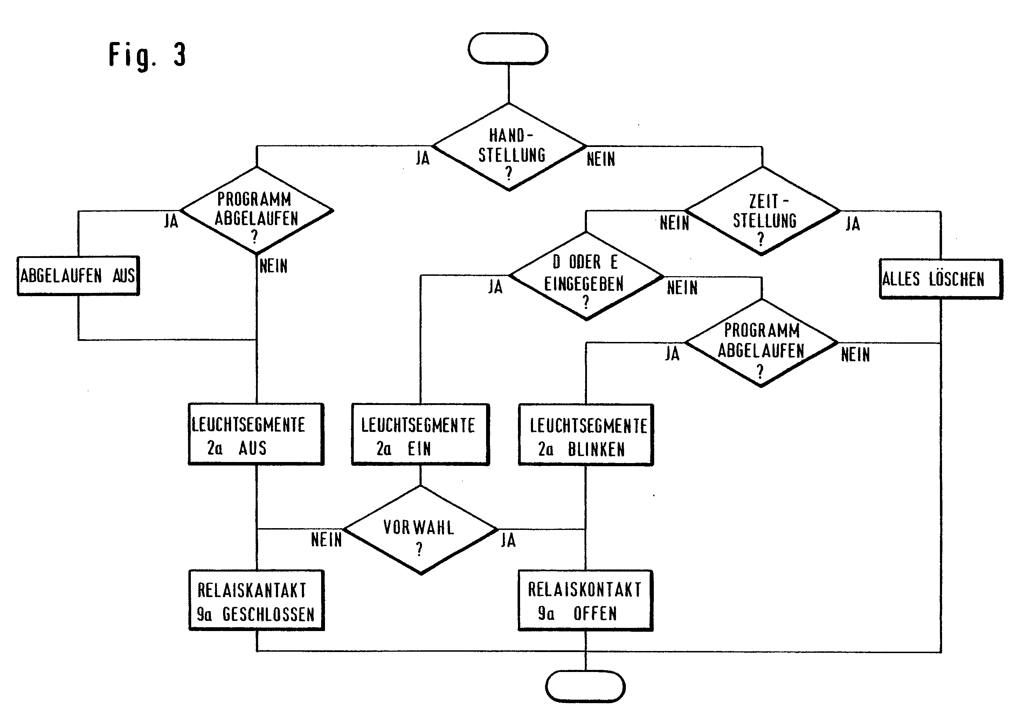

In Figur 3 ist das Flußdiagramm des Programms des Mikroprozessors 7 dargestellt, soweit es die Steuerung des Handbetriebs bzw. des Automatikbetriebes betrifft. Man erkennt, daß die Betriebsstellung "H" des Vorwahlschalters 4 die Grundstellung ist, welche der Mikroprozessor eingangs auf Vorhandensein oder nicht prüft. Man erkennt, daß im linken Teil des Flußdiagramms bei Vorhandensein der Betriebsstellung "H" der Relaiskontakt 9a immer geschlossen ist, gleichfalls bei halbautomatischem Betrieb, nämlich bei Eingabe nur einer Schaltzeitdauer oder nur eines Schaltzeitendes, mit der Folge, daß die Verbraucher sofort bei Betätigung der Energieregler eingeschaltet werden. Bei vollautomatischem Betrieb bleibt hingegen der Relaiskontakt 9a offen, solange bis der Vorwahlschalter auf Handbetrieb zurückgestellt wird. Im rechten Teil des Flußdiagramms erkennt man, daß bei der Zeitverstellung gleichzeitig alle Schaltprogrammdaten, soweit sie sich noch im Mikroprozessor befinden, gelöscht werden. Damit soll verhindert werden, daß durch Änderung der Zeiteinstellung während des Ablaufs eines Programms undefinierte Schaltzustände auftreten können.

**Ansprüche**

1. Elektronische Schaltuhr, insbesondere Herdschaltuhr, mit einem Anzeigefeld und einem Mikroprozessor als Steuerschaltkreis, wobei die Steuerfunktionen durch mehrere Schaltelemente eingegeben werden können, wobei ferner ein auf einer ersten Achse angeordneter Drehknopf zur Erzeugung von Eingabeimpulsen für die Zeitdaten vorgesehen ist, und wobei die Steuerung derart ausgestaltet ist, daß bei Eingabe von Steuerdaten, wie Schaltzeitdauer und Schaltzeitende automatisch eine Umschaltung der Schaltuhr von Hand auf Automatikbetrieb erfolgt und bei Abarbeitung des Schaltprogramms eine Zurückschaltung von Automatik- auf Handbetrieb von Hand erfolgen muß,
dadurch gekennzeichnet,
daß die Schaltelemente für die Steuerfunktionen durch einen auf einer zweiten Achse angeordneten Vorwahlschalter (4) mit mehreren Schaltstellungen gebildet werden und daß der Vorwahlschalter in der Stellung Handbetrieb (H) mechanisch mit einem Steuerkontakt (10) für ein Schaltrelais (9) für die Verbraucher (12) derart verbunden ist, daß die Verbraucher unter Überbrückung der Schaltuhr auch bei Ausfall des Mikroprozessors (7) von Hand ein- und ausschaltbar sind.

2. Schaltuhr nach Anspruch 1,
dadurch gekennzeichnet,
daß das Schaltrelais (9) ein Ruhestromrelais ist und daß sein Steuerkontakt (10) bei Stellung "Handbetrieb" (H) des Vorwahlschalters (4) geöffnet ist.

3. Schaltuhr nach Anspruch 1 oder 2,
dadurch gekennzeichnet,
daß der Vorwahlschalter (4) die Schaltstellungen "Handbetrieb" (H), Zeitverstellung (Z), Kurzzeit (K), Schaltzeitdauer (D), Schaltzeitende (E), besitzt, wobei ein Automatikbetrieb der Schaltuhr nur in den Schaltstellungen "D" und "E" möglich ist.

4. Schaltuhr nach Anspruch 3,
dadurch gekennzeichnet,
daß die Schaltstellung "Z" neben der Schaltstellung "H" angeordnet und ohne Raststellung nur durch Auslenkung des Vorwahlschalters (4) gegen Federdruck einstellbar ist.

5. Schaltuhr nach den Ansprüchen 1 oder 3,
dadurch gekennzeichnet,
daß bei der Schaltstellung "Z" des Vorwahlschalters (4) neben einer Zeitverstellung automatisch alle Schaltprogramme, wie Schaltzeitdauer und Schaltzeitende gelöscht werden.

**Claims**

1. An electronic time switch, particularly a cooker time switch, with a display panel and a microprocessor as control circuit, in which respect the control functions can be inputted by several switching elements, in which respect furthermore a rotary knob arranged on a first shaft is provided for the generation of input impulses for the time data, and in which respect the control is designed in such a way that upon input of control data, such as switching duration and switching time end, automatically a change-over of the time switch from manual to automatic operation is effected and upon completion of the switching programme a switching-back from automatic to manual operation has to be effected by hand, characterised in that the switching elements for the control functions are formed by a preselection switch (4) arranged on a second shaft and having several switching positions and in that the preselection switch in the manual operation (H) position is connected mechanically to a control contact (10) for a switching relay (9) for the consuming devices (12) in such a way that the consuming devices (12) along with bridging of the time switch even upon failure of the microprocessor (7) can be switched on and off by hand.

2. A time switch according to Claim 1, characterised in that the switching relay (9) is a quiescent-current relay and in that its control contact (10) is opened in the case of the "manual operation" (H) position of the preselection switch (4).

3. A time switch according to Claim 1 or 2, characterised in that the preselection switch (4) possesses the switching positions "manual operation" (H), time adjustment (Z), short-time (K), switching duration (D), switching time end (E), in which respect an automatic operation of the time switch is possible only in the switching positions "D" and "E".

4. A time switch according to Claim 3, characterised in that the switching position "Z" is arranged next to the switching position "H" and is adjustable without detent position only be deflection of the preselection switch (4) against spring pressure.

5. A time switch according to Claims 1 or 3, characterised in that in the case of the switching position "Z" of the preselection switch (4) besides a time adjustment automatically all the switching programmes, such as switching duration and switching time end, are cancelled.

**Revendications**

1. Minuterie électronique, en particulier minuterie d'appareil de cuisson comportant une zone d'affichage et un microprocesseur servant de circuit de commande, les fonctions de commande pouvant être introduites par plusieurs éléments de manoeuvre, un bouton tournant, destiné à engendrer des impulsions d'entrée pour les temps étant en outre prévu sur un premier axe et la commande étant conçue de manière que dans le cas où l'on introduit des données de commande, telles que la durée du temps de fonctionnement et la fin du temps de fonctionnement, il se produit automatiquement une commutation de la minuterie, du fonctionnement manuel au fonctionnement automatique et que pour interrompre le programme, il faille repasser à la main du fonctionnement automatique au fonctionnement manuel, caractérisée en ce que les éléments de manoeuvre pour les fonctions de commande sont constitués par un présélecteur (4), monté sur un deuxième axe et comportant plusieurs positions de manoeuvre et en ce que le présélecteur, en position manuelle (H), est mécaniquement relié à un contact de commande (10) d'un relais (9) pour les récepteurs (12), de manière que les récepteurs puissent être manuellement enclenchés et déclenchés, y compris en cas de défaillance du microprocesseur (7), par pontage de la minuterie.

2. Minuterie selon la revendication 1, caractérisée en ce que le relais (9) est un relais à circuit fermé et en ce que son contact de commande (10) est ouvert en position "fonctionnement manuel" (H) du présélecteur (4).

3. Minuterie selon la revendication 1 ou 2, caractérisée en ce que le présélecteur (4) possède les positions de manoeuvre "fonctionnement manuel" (H), réglage du temps (Z), temps court (K), durée du temps de fonctionnement (D), fin du temps de fonctionnement (E), un fonctionnement automatique de la minuterie n'étant possible que dans les positions de manoeuvre "D" et "E".

4. Minuterie selon la revendication 3, caractérisée en ce que la position de manoeuvre "Z" est placée à côté de la position de manoeuvre "H" et peut être réglée, sans position à cran, uniquement par déplacement du présélecteur (4), à l'encontre de la force d'un ressort.

5. Minuterie selon la revendication 1 ou 3, caractérisée en ce qu'en position de manoeuvre "Z" du présélecteur (4), outre le réglage du temps, on peut effacer automatiquement tous les programmes, tels que la durée du temps de fonctionnement et la fin du temps de fonctionnement.

# Fig. 1

# Fig. 2

**Fig. 3**

EP 0 259 639 B1